# EUROPEAN PATENT SPECIFICATION

(11) **EP 2 355 406 B1**
(45) Date of publication and mention of the grant of the patent: **08.03.2017**
(21) Application number: 10188201.7
(22) Date of filing: 20.10.2010
(51) Int. Cl.: H04L 12/24

(54) **A method for flexibly storing/retrieving data stored in a tree-based data storing device in/from a database and corresponding system**
Verfahren zum flexiblen Speichern/Abrufen von in einer baumbasierten Datenspeichervorrichtung gespeicherten Daten in/aus einer Datenbank und entsprechendes System
Procédé pour stocker/extraire flexiblement des données stockées dans un dispositif de stockage de données de type arbre dans une base de données et système correspondant

(30) Priority: 27.01.2010 EP 10151801; 30.09.2010 EP 10184314
(43) Date of publication of application: 10.08.2011
(73) Proprietor: Ricoh Company, Ltd., Tokyo 143-8555 (JP)
(72) Inventor: Skvirski, Alexei, 40472, Düsseldorf (DE); Bitor, Artjom, 40472, Düsseldorf (DE)
(74) Representative: Schwabe - Sandmair - Marx

(56) References cited:
- EP-A2- 1 324 221
- US-A- 5 291 583
- US-B1- 6 226 788
- US-B1- 6 549 943
- MCCLOGHRIE HUGHES LAN SYSTEMS K ET AL: "Management Information Base for Network Management of TCP/IP-based internets: MIB-II; rfc1213.txt", IETF STANDARD, INTERNET ENGINEERING TASK FORCE, IETF, CH, 1 March 1991 (1991-03-01), XP015007001, ISSN: 0000-0003

## Description

The present invention relates to a method for flexibly storing data relating to an object-orientated domain model in a database according to claim 1 and to a corresponding system according to claim 4.

In accordance with the prior art, a local system or a distributed system of devices has to be controlled and maintained. Data related to the devices have to be stored also in a persistent manner and often it is also necessary to identify devices based on the persisted data. The devices can be office machines such as printers, copiers, facsimile devices and so on. Furthermore, in view of the upcoming "electronic household", devices such as refrigerators, washing machines, TVs, mobile phones and the like will also have to be controlled in this manner. These different devices may have to be accessed through other entities such as for example personal computers or servers, or sometimes also directly.

In large networks many devices have to be handled which are represented through Java objects in an object oriented domain model. Often, new devices have to be added to such networks, wherein these new devices correspond to different object models or classes thereof, since such object models or classes can easily be developed. Data belonging to the different devices, i.e. their object models, have to be collected by a system server and stored in a cache. Data stored in the cache have to be transmitted regularly in a database for long term storing purposes. While the office devices, household devices or the like included in the system can change with respect to their type, manufacturer, capabilities and so forth, and thus with respect to their Java object models or related classes, the database structure is usually very inflexible, such that the system has a limited flexibility alone because of the fixed storage structure of its database. This shortcoming in particular prevents a system from being supplemented with different devices being represented by many different object models or their related classes.

In more detail, databases use very rigid data storing schemes which cannot be adapted to the changing needs of a network which is arbitrarily changed, in particular with respect to the system components included in it. In particular, if a system is based on object-orientated programming (OOP), the systems of the OOP objects of this system are not very critical since the OOP model does not specifically define the scope of domain objects and their mutual coherency. On the other hand, relational database management system (RDBMS) schemes are based on a data domain model which has to comply with very rigid and predefined storage schemes. Accordingly, the specific features of OOP systems and databases operating on the basis of RDBMS are not compatible (see for example Darwen, Hugh; Date, C. J. (March 1995) "The Third Manifesto"; ACM SIGMOD Record (New York, NY, USA: ACM Press) 24 (1): 39-49). In order to deal with this incompatibility, a class of object-relational mapping methods (ORM methods) has been developed, to support a large number of short and data-independent or orthogonal transactions. This approach is suitable for supporting many different relational database management system schemes through the use of standard Java JDBC technology and an approved framework for automatically generating RDBMS data queries from an OOP data model. However, this approach has the shortcoming that very complex data queries are necessary for accessing and searching purposes, which slows down the system as a whole and means that a change in data model is not possible without the risk of losing data or causing the whole database system to break down.

US 6,226,788 B1 pertains to an extensible network management system which may comprise a framework implemented as a set of classes in an object oriented data model and a set of service modules implementing device and data functions requested by client devices.

US 6,549,943 B1 pertains to methods and mechanisms for creating and storing information that defines one or more network devices for use with a network management system, including a method by which information about a network device may be created and represented using an abstract device definition language.

US 5,291,581 A pertains to a technique for storing object instances described in an abstract syntax in a relational database schema.

The present invention is defined by the subject-matter of the appended claims.

It is a preferred object of the present invention to increase the flexibility of the interaction between a domain model system including a number of objects (devices) controlled by a server with a temporary data memory device like a cache memory device, on the one hand, and, on the other hand, a database.

This object is solved at least in part by the subject-matter of the independent claims. The features specified in the dependent claims provide advantages and should also be inventive in combination with the features of the independent claims.

According to one aspect of the invention, a method is proposed for flexibly storing data relating to an object-oriented domain model including a server having access to a cache memory device holding the data, wherein the cache memory device includes a tree-based storage structure comprising a tree of nodes, a server being connected to a number of devices being represented by Java entity objects related to Java models, each Java model in particular including at least one class, the server furthermore being connected to a database for persisting data held in the cache memory device, the method including the following steps:
a) assigning to a particular Java entity object meta entity container including full qualified name (FQN) of the Java entity object, the FQN representing the location of the Java entity object in the tree of nodes in the cache memory device;
b) creating a unique identity identification (ID) and assigning this ID to the FQN and storing this ID in the meta entity container including the FQN, which meta entity container is stored in a cache or the separate section of the cache memory device;
c) assigning a unique key to the Java model or a class of the Java model representing the device in the domain model;
d) assigning the ID to the key and assigning the data to be persisted to the ID and key and forming a mapping data container therewith and storing this mapping data container in a cache or a separate section of the cache memory device; and
e) storing the mapping data container in a memory, e.g. the cache memory device or a section thereof, e.g. in a table, wherein the unique ID is suitable to work as a pointer to a certain storing position of the persisted data in the table structure of the database.

It is important in accordance with the invention to enhance the flexibility of storing data in a database through an exchange of data between the system cache and the system database.

In accordance with the invention, a system composed of a number of devices is to be controlled with respect to storing and accessing data relating to the different devices. The temporary data memory device preferably has the structure of a tree of nodes, wherein the cache memory can in particular have the structure of the known JBoss™ cache memory device. In such a JBoss™ cache, each node is uniquely referenced by its fully qualified name (FQN) and can contain arbitrary objects stored as key-value pairs. This JBoss™ cache provides a basis for extendable data structures by means of arbitrary semantic topologies.

The JBoss™ cache device stores a structure of a network based on a Java-based domain model as well as device-related data of devices based on a tree-based storage organisation. The devices are represented by Java objects related to the same and/or different object models.

If a device has to be added, it is not known which kind of object model is used. Therefore, it is necessary to adapt the system to be able to flexibly deal with new models occurring due to the addition of devices.

If data related to a device and thus to its corresponding object have to be stored or retrieved, it is necessary that the Java model in corresponding classes are stored in a model data storage accessible through the server which has access to the JBoss™ cache. By the way, of course, any kind of storage with a tree-based memory structure should be useable in accordance with the invention. If the model is not known, it has to be added to the model data storage.

If data have to be stored in a database connected to the server, the server generates a unique ID related to a FQN and stores this data, i.e. the ID and its related FQN in a separate memory or a memory space of the cache memory device according to the invention. The separate memory can also be a cache with a tree-structure. Accordingly, it is preferred that the ID which, with its FQN is included in a meta entity container, is related to a certain of the nodes in the tree-structure describing a Java object composition with its root node as its most important address information.

Another data storage or data storage section of the cache memory device of the invention is related to the same ID, a key and a value or several values related to the Java object of the device represented by this Java object. This information can be called a mapping data container which via its ID has a unique relationship to its corresponding meta entity container. The key refers to the Java model or a corresponding class of this Java model uses to describe the device through software in the domain model. The value or values correspond to information or data about the device, e.g. value or data of a counter, a status, a technical information or the like of said device.

The key enables a mapping device to select a data model from the Java model storage and to assign the value, values or other corresponding data to the correct data space in the Java model of the device, in particular in case information stored in the database has to be retrieved and to be up-loaded to the server and/or its cache or JBoss™ cache.

If searchable information which is searched for is found in a storage area of the storage, the related ID will be used as a pointer to retrieve data from a unique data storage location in the database. Thus, the data retrieval can be very quick since no sequential search in the database has to be performed. Furthermore, any kind of data in different Java objects can flexibly be stored in the database because the data stored in the database can be stored in more or less inflexible tables, but can be mapped flexibly to matching data locations in Java entity models known to the server, since the key refers to this matching Java model.

Of course, if a device to be added to the network complies with a Java model not known to the server, i.e. its mapping device, the corresponding Java model has to be stored to be accessible by the mapping device and a key will be assigned to this model.

This key, as indicated above, can be used for mapping and information purposes, i.e., data to be stored in the database or to be retrieved from the database can be extracted from an object model or a corresponding class thereof, for storing the data in the database. On the other hand, if said data have to be retrieved from the inflexible table format of the database, the data can be assigned flexibly to the correct data location in the Java object representing the device and can be loaded through a cache loader software into the cache memory device of the server, thereby also using the FQN to access the correct position in its tree-based structure. Thus, it is possible to assign searched data to particular Java entity objects in the overall system and to identify particular devices in the system which are related to the searched and retrieved data.

In accordance with the present invention, the data stored in the temporary data memory device are transformed into a data structure which can be stored in a database which is operated on the basis of RDBMS. Thus, in accordance with the present invention, the in-memory structures of the temporary data memory device and the data stored within them are transformed into a persistent data structure which can be stored in a database. As indicated, it is important to notice that this storage process can be performed independent of the variety of Java object models used in or added to the overall network.

In accordance with the present invention, the system can consist of a large number of office devices such as printing devices, scanners, plotting devices, multi-function office machines and the like, wherein each of these different entities has to be accessed through a specific object model. In accordance with the present invention, the data are transformed on the basis of a loader process which uses the known JPA model (Java persistence API, see http://java.sun.com/javaee/technologies/persistence.jsp).

In accordance with the following, the figures listed below are briefly explained:
- Figure 1: shows a cache structure based on in-memory information handling, in particular a JBoss™ cache structure;
- Figure 2: shows an example of a data model of a printing device;
- Figure 3: shows a representation of a cache in-memory persistence, in particular a representation relating to a JBoss™ cache;
- Figure 4: shows a representation of a temporary data memory device (cache) and a database structure showing the different data formats;
- Figure 5: shows a representation of mapping principles or transformation features of the present invention;
- Figure 6: shows a structure model of a temporary data memory device and in particular a cache which is based on the OOP structure model;
- Figure 7: shows a representation of a RDBMS-related structure model of a temporary data memory device, in particular a cache memory;
- Figure 8: shows a representation of a look-up table which assigns a NODE ID to an FQN;
- Figure 9: shows a look-up table for finding a specific ENTRY ID through a combination of FQN and ENTITY KEY attributes; and
- Figure 10a and b: are showing details from Figure 5, showing a transformation for data to be transmitted from a temporary data memory device to a database.

In accordance with the present invention, the preferred data model for a temporary data memory device is that of a cache memory device exhibiting the structure of a tree of nodes. These data are to be transformed into persistent data which can be stored in a database. Thus, in accordance with the invention, data exhibiting the structure of a temporary data memory device such as a cache which uses the structure of a tree of nodes, can be transformed into a structure based on tables and relations to be stored in a relational database. The data stored in the cache have to be mapped in order to be stored in an RDBMS representation, which can for example be achieved using Java persistence API (JPA), wherein the persistence in object-orientated programming relates to the permanence of an object, which is particularly relevant to the contents of object-orientated databases which maintain a distinction between objects created only for the duration of execution and objects intended for permanent storage. Thus, persistence is one of the fundamental elements of the object model.

In accordance with the invention, two kinds of data have to be transformed into a persistent structure. Firstly, the domain model which consists of a number of entities has to be transformed into a persistent model. Secondly, the structure of the temporary data memory device, preferably a cache, has to be transformed in such a way that the data can be assigned to the in-memory structure of the cache, in particular a JBoss™ cache. Once the relevant data have been transformed and mapped on the basis of the loader procedure, the resultant persistent data can be stored in the database.

Thus, in accordance with the invention, it is important that in addition to data relating to the entity as a part of the domain model, information is available which corresponds to the cache structure and in particular consists of FQN and KEY. The FQN described the position of a node in the cache and the KEY specifies where an entity has to be stored under such a node. An entity to be persisted according to this structure has to be prepared in terms of persistence, such that the necessary mapping information can be provided for JPA. Thus, there is already an extant relationship to a corresponding table which defines how to map the entity data. However, the structure of the temporary data memory device and in particular the cache also has to be persisted.

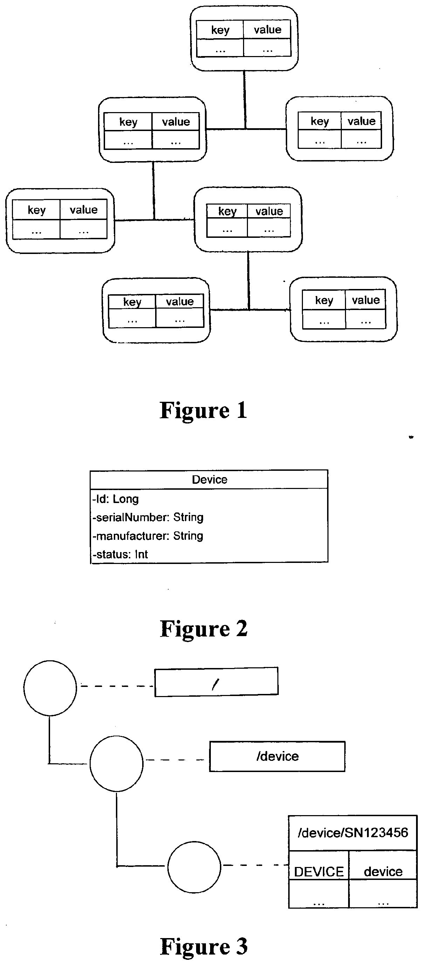

A temporary data memory device of Figure 1, which is in particular a JBoss™ cache, can preferably be organised as a tree of nodes. Each node is uniquely referenced by a fully qualified name (FQN) - for example "/device/SN1234567" and can contain arbitrary objects stored as key-value pairs. This approach is helpful in generating a base for an extendable data structure by providing a starting point for developing arbitrary semantic topologies. It is one of the intentions of the present invention to control the transmission of data coming from a multiplicity of printing devices.

It should be noted that a cache, and in particular the JBoss™ cache, allows for a simplified persistence strategy as a reference implementation. However, this can only be considered as an adequate approach for dealing with ordinary and/or simple applications which do not make substantial demands on application data performance and data maintainability.

The invention focuses on achieving optimum data extraction/modification performance in the domain technology used in the usual RDBMS.

Figure 2 shows a representative data model for a printing device. The data model structure can include data relating to said particular device, for example a printing device, a multi-function office device, a facsimile device, a scanner or even a household appliance device, a mobile phone or the like, which can be described and identified by an identifiable ID, a serial number, the manufacturer's name, a model designation, a status, one or more special and/or variable conditions, and so on.

Following the methodology of the JBoss™ cache, it is suitable to store this data model in the cache as shown in Figure 3.

As can be seen in Figure 3, the data semantics are reflected by the graph's node structure which is uniquely addressed via a corresponding FQN.

According to the invention, an efficient and flexible RDBMS representation of said in-memory data stored in a temporary data memory device such as a cache or a JBoss™ cache is provided, wherein an arbitrary graph of Java objects is processed to be stored in an RDBMS. The Java objects are part of a domain model of the system which has to be served. Some of these Java objects are representing entities of the real world (e.g., data retrieved from printers, manufacturing devices, household devices, other office machines, mobile phones and the like). Other of these objects may represent a specific hierarchical structure used to organise objects of the domain model. Here, both, the hierarchical structure and the domain model to the RDBMS are to be stored in an efficient and flexible way using a standard technology, in particular Java persistence API. Thus, a tool for fast accessing and manipulating of the stored data is provided.

According to one embodiment of the invention, in order to be able to save data to or retrieve data from the RDBMS using a JBoss™ cache, it is necessary to introduce specific cache loader tools (see http://www.jboss.org/file-access/default/members/jbosscache/freezone/docs/ 3.2.1.GA/userguide_en/html_single/index.html#cache_loaders as a source of reference information).

One example of suitable operations for a cache loader, in particular for a JBoss™ cache, would be as follows:
1. retrieving an entity using a specific FQN and KEY;
2. retrieving all the entities under a specific FQN;
3. persisting an entity using a specific FQN and KEY;
4. persisting all the entities under a specific FQN;
5. removing an entity using specific FQN and KEY;
6. removing all the entities under a specific FQN;
7. removing all the children under a specific FQN (including sub-nodes and entities) relating to the tree of nodes;
8. retrieving the name of the children for a specific FQN.

It is advantageous to base a cache loader implementation on JPA (Java Persistence API, see http://java.sun.com/javaee/technologies/persistence.jsp as a source of reference information). Like any other ORM framework, JPA maps OOP instances to the RDBMS domains.

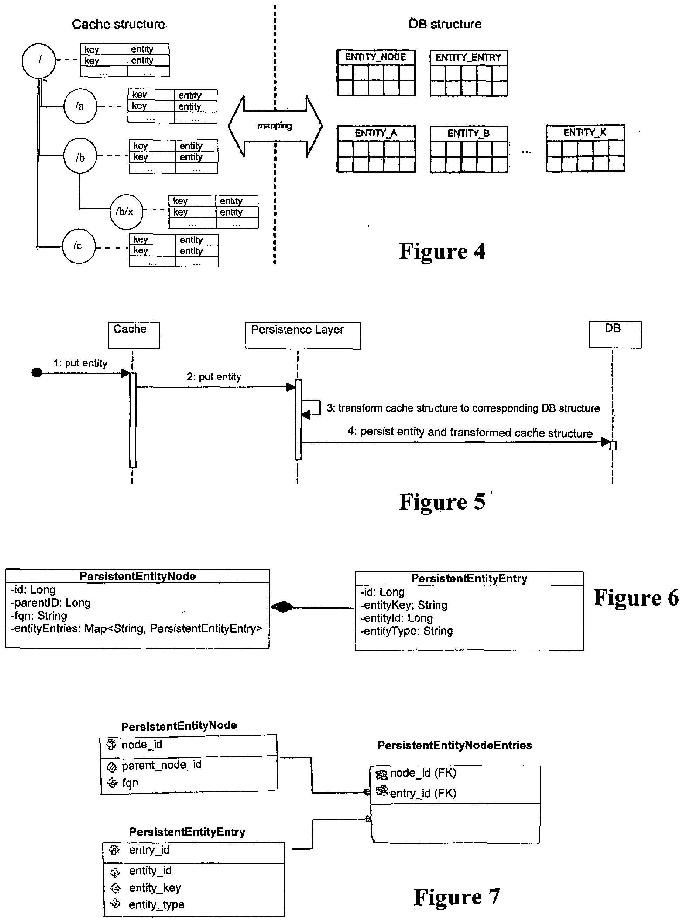

It is then appropriate to define a data model for the cache structure and to develop a corresponding RDBMS representation in order to transform data from the structure used in a cache into the structure necessary for a database such as an RDBMS domain as shown in Figure 4.

The data stored in the memory has a structure within a cache which uses a structure of nodes. These data are to be persisted in a relational database which stores data using a different organisational concept, i.e. tables and relationships, as shown in Figure 4.

In order to persist data from the in-memory cache, the data have to be mapped in order to be translated into the corresponding RDBMS representation. This can for example be achieved using Java Persistence API (JPA). This object-relational mapping (ORM) technology is suitable for persisting the information retained within the objects (OOP world), i.e. office devices such as e.g. printers, to corresponding tables (RDBMS world) which are stored and accessible in the database.

It is advisable to distinguish between two kinds of data which are to be persisted. On the one hand, there is a domain model consisting of a number of objects representing arbitrary kinds of devices such as printers (referred to as "entities"). On the other hand, the cache structure itself - i.e. the information about the structure of the domain model - also has to be stored in the database in order to be able to assign the correct data, subsequently retrieved from the database, to the correct node in the cache memory. Figure 5 shows a high-level view of an example sequence for putting an entity into the cache.

Once said particular entity has been stored in the cache (i.e. is in-memory), it has to be persisted in order to be stored in the database. This can be achieved using a persistence layer. Since two different kinds of data, i.e. the entity itself and the corresponding cache structure information, are to be stored on a long-term basis, a transformation of the aforementioned cache structure has to be performed first. Both kinds of data can then be stored in the database.

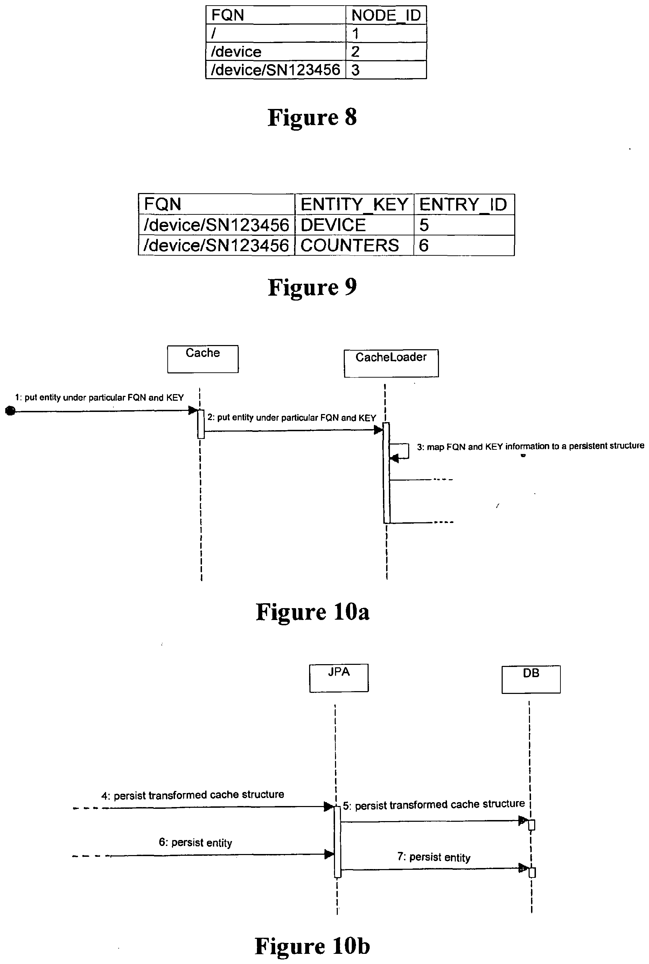

The transformation of the cache structure to its persistent representation is achieved by creating for each node in the cache structure an object which is working within the framework of the model shown in Figure 6, while Figure 10 shows the mapping in order to achieve the RDBMS data structure.

As can be seen from Figure 6, the PersistentEntityNode class describes the corresponding node in the cache structure and the PersistentEntityEntry classfunctions as a virtual pointer to an arbitrary entity stored under said particular key within a node of the cache, as specified by the given FQN, see for example Figure 3 in which the FQN "/device/SN123456" uniquely refers to the node which stores the device model data stored under the "DEVICE" key. In Figure 6, entity-Id is a primary key pointing to the device model entity, and entityType represents for example a fully qualified Java class name. This enables the method of the invention to access data of the entity in a virtual manner using JPA functionality, in particular the finding method of the interface "EntityManager" as can be seen at http://java.sun.com/ javaee/5/docs/api/javax/persistence/EntityManager.html#find(java.lang.Class.%20java.lang.O bject. Fig. 5 illustrates a structure model which is RDBMS-related and is related to a cache memory and in particular a JBoss ™ cache.

The FQN parameter, together with the data model key stored in the RDBMS tables, is therefore an important factor which can affect the overall application performance from the standpoint of persistent data manipulation. The invention allows an efficient way of manipulating data in order to produce these parameters. Two basic problems which arise when PersistentEntityNode and PersistentEntityEntry tables are accessed have to be taken into account, wherein the FQN and entityKey are both strings of variable length. As is already known from relational database theory, a search operation based on strings inevitably results into a full table scan, which in turns leads to O(n) records I/O per operation and thus a nearly parabolic [O(n²)] dependency for n operations.

In this aspect of the invention, data access operations based on a primary key seem to be advantageous in order to eliminate searching within the RDBMS for (even indexed) FQN and entity-key attributes, which is then pre-selected using a specially constructed in-memory look-up table or tables.

As shown in Figure 8, the first look-up table represents the association between the FQN and the node ID which can be used for all PersistentEntityNode-related operations in which only the FQN attribute is important (such as operation No. 2 mentioned above on page 13). Figure 8 demonstrates a possible mapping if applied to the example structure. If, for example, the names of all the children of any one of the specific nodes are requested (as in operation No. 8 above), then accessing this table using the FQN immediately yields a respective NODE_ID (single operation), i.e. for example in the case of the FQN "/device", this returns the result that the NODE_ID is 2. This table can be easily implemented in Java as an associative container (for example, HashMap) which guarantees a constant complexity cost for access operations of O(1) for good hash functions.

The second look-up table, shown in Figure 9, works in a similar way. It is adapted for finding an ENTRY_ID using a combination of FQN and ENTITY_KEY attributes (as used in operation No. 1 and operation No. 3 as mentioned above).

Figure 9 refers to a scenario in which there are two different entities stored under the same FQN. If, in operation No. 1 as mentioned above, FQN was specified as being equal to "/device/SN123456" and ENTITY_KEY was specified as being equal to "DEVICE", then the look-up table would return the result that the ENTRY_ID is 5. Such a look-up table can be implemented in Java as a map containing pairs each including a key and a value. The FQN would be used as the key and the value would comprise a further map with pairs of keys and values. This further map would use an ENTITY_KEY as the key and an ENTITY_ID as the value The complexity cost per search operation is again comparatively low and about twice as much as O(1), since two maps are sequentially accessed. The first access is for retrieving a particular FQN and the further or second map from which the ENTITY-ID can be retrieved by means of the related ENTITY_KEY.

In both cases, however, the result of the look-up operations completely avoids using a highly complex string search within an RDBMS-structured database, by substituting it instead with a fast and low-complexity primary key access.

Figure 10a and 10b are showing - in addition to the entity which is a part of the domain model - the information of the corresponding cache structure, for example FQN and KEY, which is suitable for developing a mapping strategy. This information describes the key under which an entity is to be stored, and in which node in the cache. The entity itself is already prepared in terms of persistence, i.e. the necessary mapping information is already provided to the JPA, such that it knows how to map the entity data into the corresponding table(s). In the cache structure, there are two alternatives available: it is either also prepared in the same way, or has to be transformed. In accordance with this embodiment, the second alternative is implemented for a number of reasons. One of these reasons can come up in a situation where the structure of the cache is fixed, and adding mapping information to the structure may not be supported by this particular cache implementation (this is especially true for the JBoss™ cache). Another reason would be if the persistent representation of the cache structure may require a different form, e.g. if only the necessary information should be persisted instead of all data contained in a node. Figure 6 describes such a representation of the internal cache structure. All the necessary mapping information is included in this representation, such that it is possible to persist this representation in order to be stored in the database using JPA.

Thus, it is possible to identify two different transformations which are developed in accordance with the present invention, i.e. a transformation of the cache structure into a persistent representation. The first is performed in the Cache Loader (as part of the persistence layer) by creating the necessary objects (OOP-to-OOP transformation), whereas the latter uses the standard API, i.e. JPA (OOP-to-RDBMS transformation).

In accordance with one aspect of the invention, it is thus not necessary to introduce an RDBMS-specific mechanism for manipulating directed acyclic graph (DAG) structures. The so called graph structures are used in mathematics and computer science to describe topological relationships between several elements of a given system (the so-called nodes or vertices) and the pathways between them (called lines or edges). The directed graph specializes this concept in a way of handling the so-called "ordered entities" - which means that there is a sort of ordering relationship between the conjugate nodes. We can here take an example of any organisational chart of a company where the boss level is normally depicted above of theirs employees'. Then the necessity of not having any "closed" or otherwise called "looped" pathways started and ended at the same node results to the requirement of this graph to be "loopless" or otherwise called "acyclic". These requirements are all in all implemented in the specification of the XML modelling language of W3C international committee. However, comprehensive XML data type model and indexing is not yet fully implemented by all the RDBMS vendors and thus by the available software.

In addition, the data reading and updating performance is almost or completely independent of the complexity of the application data model, since the proposed invention does not need to perform a Full Table Scan over a data table column containing FQN values.

The data reading and updating performance also has a nearly linear dependence on the complexity of the data elements being persisted, in contrast to the standard quadratic dependence observed in prior-art methods.

The proposed invention also significantly reduces the load on the RDBMS system, resulting in better CPU utilisation.

## Claims

1. A method for flexibly storing data relating to an object-oriented domain model including a server having access to a cache memory device holding the data, wherein the cache memory device includes a tree-based storage structure comprising a tree of nodes, a server being connected to a number of devices being represented by Java entity objects related to Java models, each Java model in particular including at least one class, the server furthermore being connected to a database for persisting data held in the cache memory device,
**characterized by** the method including the following steps:
a) assigning to a particular Java entity object representing a device of the number of devices a meta entity container including fully qualified name (FQN) of the Java entity object, the FQN representing the location of the Java entity object in the tree of nodes in the cache memory device;
b) creating a unique identity identification (ID) and assigning this ID to the FQN and storing this ID in the meta entity container including the FQN, which meta entity container is stored in a cache or a separate section of the cache memory device;
c) assigning a unique key to the Java entity model or class thereof representing the device in the domain model;
d) assigning the ID to the key and assigning the data to be persisted to the ID and key and forming a mapping data container therewith and storing this mapping data container in a cache or a separate section of the cache memory device; and
e) storing the mapping data container in a memory, wherein the unique ID is suitable to work as a pointer to a certain storing position of the persisted data in the table structure of the database,
wherein in case persisted data have to be retrieved from the database, the persisted data are searched for in the searchable data stored in particular in the cache, to provide at least one or a multiplicity of mapping data containers including the searched data, in case said data have been persisted; based on the ID included in the at least one mapping data container, accessing the matching location in the database for transmitting the data to the cache memory device, wherein the key assigned to the ID is used to reload the persisted data into the corresponding Java entity model forming a Java entity object at a corresponding location in the tree of nodes in the cache memory device; using the mapping data container related to the ID to identify the matching Java entity model in the object-oriented domain model.

2. The method according to the preceding claim, wherein the device represented by the Java entity model or its class is identified.

3. The method according to one of the preceding claims, wherein the cache or the cache memory device is a JBoss™ cache.

4. A system for persisting and storing data in a database, said data being created in an object-oriented domain model, said data being related to devices represented by Java entity models or classes thereof, and said data being temporarily stored in a tree-based cache memory device, said system comprising:
i) a server accessing said devices and the cache memory device, the cache memory device having the structure of a tree of nodes, wherein said nodes are storing Java entity objects,
**characterized by**
ii) the cache memory device or a separate section of the cache memory device storing an ID or entity ID and a fully qualified name (FQN), the FQN being related to a particular node holding a particular Java entity object;
iii) a second memory device, for storing a mapping data container including the ID being related to the data to be persisted, and a key representing a particular Java entity model or class thereof;
iv) a mapping device for storing Java entity models or classes thereof and for assigning a unique key for a corresponding Java entity model or class thereof;
v) wherein the database being configured to store the data with reference to the ID as a pointer for retrieving/storing the persisted data/data to be searched for, wherein in case persisted data have to be retrieved from the database, the persisted data are searched for in the searchable data stored in particular in the cache, to provide at least one or a multiplicity of mapping data containers including the searched data, in case said data have been persisted; based on the ID included in the at least one mapping data container, accessing the matching location in the database for transmitting the data to the cache memory device, wherein the key assigned to the ID is used to reload the persisted data into the corresponding Java entity model forming a Java entity object at a corresponding location in the tree of nodes in the cache memory device; using the mapping data container related to the ID to identify the matching Java entity model in the object-oriented domain model.

## Patentansprüche

1. Verfahren zum flexiblen Speichern von Daten, die sich auf ein objektorientiertes Bereichsmodell beziehen, das einen Server mit einem Zugriff auf eine Cache-Speichervorrichtung enthält, die die Daten enthält, wobei die Cache-Speichervorrichtung eine auf einem Baum basierende Speicherstruktur enthält, die einen Baum von Knoten umfasst, wobei ein Server, der mit einer Anzahl von Vorrichtung verbunden ist, durch Java-Entitätsobjekte in Bezug auf Java-Modelle repräsentiert wird, wobei jedes Java-Modell insbesondere mindestens eine Klasse enthält, wobei der Server weiterhin mit einer Datenbank verbunden ist, um Daten, die in der Cache-Speichervorrichtung gehalten werden, beizubehalten, **dadurch gekennzeichnet, dass** das Verfahren die folgenden Schritte enthält:
a) Zuweisen eines Metaentitätsbehälters, der einen vollständig qualifizierten Namen (FQN) des Java-Entitätsobjekts enthält, zu einem bestimmten Java-Entitätsobjekt, das eine Vorrichtung der Anzahl von Vorrichtungen repräsentiert, wobei der FQN den Ort des Java-Entitätsobjekts in dem Baum von Knoten in der Cache-Speichervorrichtung repräsentiert;
b) Erzeugen einer eindeutigen Identitätsidentifikation (ID) und Zuweisen dieser ID an den FQN und Speichern dieser ID in dem Metaentitätsbehälter, der den FQN enthält, wobei der Metaentitätsbehälter in einem Cache-Speicher oder einem getrennten Abschnitt der Cache-Speichervorrichtung gespeichert ist;
c) Zuweisen eines eindeutigen Schlüssels zu dem Java-Entitätsmodell oder seiner Klasse, die die Vorrichtung in dem Bereichsmodell repräsentiert;
d) Zuweisen der ID zu dem Schlüssel und Zuweisen der beizubehaltenden Daten zu der ID und dem Schlüssel und Erzeugen eines Abbildungsdatenbehälters mit ihnen und Speichern dieses Abbildungsdatenbehälters in einem Cache-Speicher oder einem getrennten Abschnitt der Cache-Speichervorrichtung; und
e) Speichern des Abbildungsdatenbehälters in einem Speicher, wobei die eindeutige ID geeignet ist, als ein Zeiger auf eine bestimmte Speicherposition der beibehaltenen Daten in der Tabellenstruktur der Datenbank zu arbeiten,
wobei in dem Fall, in dem beibehaltene Daten aus der Datenbank erfasst werden müssen, nach den beibehaltenen Daten in den durchsuchbaren Daten, die insbesondere in dem Cache-Speicher gespeichert sind, gesucht wird, um mindestens einen oder mehrere Abbildungsdatenbehälter, die die gesuchten Daten enthalten, in dem Fall zu liefern, in dem die Daten beibehalten wurden; anhand der in dem mindestens einen Abbildungsdatenbehälter enthaltenden ID Zugreifen auf den Abbildungsort in der Datenbank, um die Daten an die Cache-Speichervorrichtung zu senden, wobei der der ID zugewiesene Schlüssel verwendet wird, um die beibehaltenen Daten in das entsprechende Java-Entitätsmodell neu zu laden, das ein Java-Entitätsobjekt an einem entsprechenden Ort in dem Baum von Knoten in der Cache-Speichervorrichtung bildet; Verwenden des Abbildungsdatenbehälters, der sich auf die ID bezieht, um das übereinstimmende Java-Entitätsmodell in dem objektorientierten Bereichsmodell zu identifizieren.

2. Verfahren nach dem vorhergehenden Anspruch, wobei die durch das Java-Entitätsmodell oder ihre Klasse repräsentierte Vorrichtung identifiziert wird.

3. Verfahren nach einem der vorhergehenden Ansprüche, wobei der Cache-speicher oder die Cache-Speichervorrichtung ein JBOss™-Cache-Speicher ist.

4. System zum Beibehalten und Speichern von Daten in einer Datenbank, wobei die Daten in einem objektorientierten Bereichsmodell erzeugt werden, wobei sich die Daten auf Vorrichtungen beziehen, die durch Java-Entitätsmodelle oder ihre Klassen repräsentiert werden, und die Daten vorübergehend in einer auf einem Baum basierenden Cache-Speichervorrichtung gespeichert sind, wobei das System umfasst:
i) einen Server, der auf die Vorrichtungen und die Cache-Speichervorrichtung zugreift, wobei die Cache-Speichervorrichtung die Struktur einen Baums von Knoten besitzt, wobei die Knoten Java-Entitätsobjekte speichern,
**gekennzeichnet durch**
ii) die Cache-Speichervorrichtung oder einen getrennten Abschnitt der Cache-Speichervorrichtung, der eine ID oder eine Entitäts-ID und einen vollständig qualifizierten Namen (FQN) speichert, wobei sich der FQN auf einen besonderen Knoten bezieht, der ein besonderes Java-Entitätsobjekt enthält;
iii) eine zweite Speichervorrichtung zum Speichern eines Abbildungsdatenbehälters, der die ID, die sich auf die beizubehaltenden Daten bezieht, und einen Schlüssel, der ein besonderes Java-Entitätsmodell oder ihre Klasse repräsentiert, enthält;
iv) Abbildungsvorrichtung zum Speichern von Java-Entitätsmodellen oder ihren Klassen und zum Zuweisen eines eindeutigen Schlüssels für ein entsprechendes Java-Entitätsmodell oder seine Klasse;
v) wobei die Datenbank konfiguriert ist, die Daten in Bezug auf die ID als einen Zeiger zum Erfassen/Speichern der beibehaltenen Daten/der zu suchenden Daten zu speichern, wobei in dem Fall, in dem beibehaltene Daten aus der Datenbank erfasst werden müssen, nach den beibehaltenen Daten in den durchsuchbaren Daten, die insbesondere in dem Cache-Speicher gespeichert sind, gesucht wird, um in dem Fall, in dem die Daten beibehalten wurden, mindestens einen oder mehrere Abbildungsdatenbehälter zu liefern, die die gesuchten Daten enthalten; anhand der in dem mindestens einen Abbildungsdatenbehälter enthaltenden ID, Zugreifen auf den Abbildungsort in der Datenbank, um die Daten an die Cache-Speichervorrichtung zu senden, wobei der der ID zugewiesene Schlüssel verwendet wird, um die beibehaltenen Daten in das entsprechende Java-Entitätsmodell neu zu laden, das ein Java-Entitätsobjekt an einem entsprechenden Ort in dem Baum von Knoten in der Cache-Speichervorrichtung bildet; Verwenden des Abbildungsdatenbehälters, der sich auf die ID bezieht, um das übereinstimmende Java-Entitätsmodell in dem objektorientierten Bereichsmodell zu identifizieren.

## Revendications

1. Procédé pour stocker de manière flexible des données relatives à un modèle de domaine orienté objet incluant un serveur ayant accès à un dispositif de mémoire cache contenant les données, où le dispositif de mémoire cache inclut une structure de stockage arborescente comprenant un arbre de noeuds, un serveur étant connecté à un certain nombre de dispositifs étant représentés par des objets d'entité Java relatifs aux modèles Java, chaque modèle Java en particulier incluant au moins une classe, le serveur étant en outre connecté à une base de données pour données persistantes conservées dans le dispositif de mémoire cache,
**caractérisé par** le procédé incluant les étapes suivantes consistant à :
a) assigner à un objet d'entité Java particulier représentant un dispositif faisant partie du certain nombre de dispositifs un conteneur de méta-entités incluant un nom complètement qualifié (FQN) de l'objet d'entité Java, le FQN représentant la localisation de l'objet d'entité Java dans l'arbre de noeuds dans le dispositif de mémoire cache ;
b) créer un identifiant d'authentification unique (ID) et assigner cet ID au FQN et stocker cet ID dans le conteneur de méta-entités incluant le FQN, lequel conteneur de méta-entités est stocké dans un cache ou une section séparée du dispositif de mémoire cache ;
c) assigner une clé unique au modèle d'entité Java ou à la classe de celui-ci représentant le dispositif dans le modèle de domaine ;
d) assigner l'ID à la clé et assigner les données à faire persister à l'ID et à la clé et former un conteneur de données de cartographie avec celles-ci et stocker ce conteneur de données de cartographie dans un cache ou une section séparée du dispositif de mémoire cache ; et
e) stocker le conteneur de données de cartographie dans une mémoire, où l'ID unique est adapté pour fonctionner comme pointeur vers une certaine position de stockage des données persistantes dans la structure de tables de la base de données,
où dans un cas où les données persistantes doivent être récupérées à partir de la base de données, les données persistantes sont recherchées dans les données consultables stockées en particulier dans le cache, pour fournir au moins un ou une multiplicité de conteneurs de données de cartographie incluant les données consultables, dans un cas où lesdites données sont persistantes ; sur la base de l'ID inclus dans l'au moins un conteneur de données de cartographie, accéder à la localisation équivalente dans la base de données pour transmettre les données au dispositif de mémoire cache, où la clé assignée à l'ID est utilisée pour recharger les données persistantes dans le modèle d'entité Java correspondant formant un objet d'entité Java au niveau de la localisation correspondante dans l'arbre de noeuds du dispositif de mémoire cache ; utiliser le conteneur de données de cartographie associé à l'ID pour identifier le modèle d'entité Java équivalent dans le modèle de domaine orienté objet.

2. Procédé selon la revendication précédente, où le dispositif représenté par le modèle d'entité Java ou sa classe est identifié.

3. Procédé selon l'une des revendications précédentes, où le cache ou le dispositif de mémoire cache est un cache JBoss™.

4. Système pour faire persister et stocker des données dans une base de données, lesdites données étant créées dans un modèle de domaine orienté objet, lesdites données étant relatives aux dispositifs représentés par des modèles d'entité Java ou des classes de ceux-ci, et lesdites données étant temporairement stockées dans un dispositif de mémoire cache arborescent, ledit système comprenant :
i) un serveur accédant auxdits dispositifs et au dispositif de mémoire cache, le dispositif de mémoire cache ayant la structure d'un arbre de noeuds, où lesdits noeuds stockent des objets d'entité Java,
**caractérisé par**
ii) le dispositif de mémoire cache ou une section séparée du dispositif de mémoire cache stockant un ID ou un ID d'entité et un nom complètement qualifié (FQN), le FQN étant relatif à un noeud particulier contenant un objet d'entité Java particulier ;
iii) un second dispositif de mémoire, pour stocker un conteneur de données de cartographie incluant l'ID relatif aux données à faire persister, et une clé représentant un modèle d'entité Java particulier ou la classe de celui-ci ;
iv) un dispositif de cartographie pour stocker des modèles d'entité Java ou les classes de ceux-ci et pour assigner une clé unique pour un modèle d'entité Java correspondant ou la classe de celui-ci ;
v) où la base de données est configurée pour stocker les données concernant l'ID sous forme de pointeur pour récupérer/stocker les données persistantes/données à rechercher, où dans un cas où des données persistantes doivent être récupérées à partir de la base de données, les données persistantes sont recherchées dans les données consultables stockées en particulier dans le cache, pour fournir au moins un ou une multiplicité de conteneurs de données de cartographie incluant les données consultables, dans un cas où lesdites données sont persistantes ; sur la base de l'ID inclus dans l'au moins un conteneur de données de cartographie, accéder à la localisation équivalente dans la base de données pour transmettre les données au dispositif de mémoire cache, où la clé assignée à l'ID est utilisée pour recharger les données persistantes dans le modèle d'entité Java correspondant formant un objet d'entité Java au niveau de la localisation correspondante dans l'arbre de noeuds du dispositif de mémoire cache ; utiliser le conteneur de données de cartographie associé à l'ID pour identifier le modèle d'entité Java équivalent dans le modèle de domaine orienté objet.
